# EUROPEAN PATENT SPECIFICATION

(11) **EP 4 193 630 B1**
(45) Date of publication and mention of the grant of the patent: **22.05.2024**
(21) Application number: 21748886.5
(22) Date of filing: 23.07.2021
(51) Int. Cl.: H04W 12/126, H04W 12/72, H04W 12/73, H04W 12/48, H04W 12/60, H04L 9/40, G06Q 20/32, G06Q 20/40

(54) **A SIM FRAUD DETECTION METHOD AND APPARATUS**
VERFAHREN UND VORRICHTUNG ZUR SIM-BETRUGSERKENNUNG
APPAREIL ET PROCÉDÉ DE DÉTECTION DE FRAUDE DE SIM

(30) Priority: 05.08.2020 EP 20189721
(43) Date of publication of application: 14.06.2023
(73) Proprietor: Oxygen8 Communications Ireland Limited, Dublin 2, D02 YH34 (IE)
(72) Inventor: PERO, Nicola, 20138 Milano (IT)
(74) Representative: Weldon O'Brien Ltd.
(86) International application number: PCT/EP2021/070682
(87) International publication number: WO 2022/028924

(56) References cited:
- WO-A1-2015/193629
- US-A1- 2013 166 450
- US-A1- 2015 038 120
- US-A1- 2018 152 845
- US-B1- 9 699 660

## Description

### Introduction

The present invention relates to SIM (Subscriber Identify Module) card fraud detection.

This is a type of fraud in which fraudsters, typically using social engineering and/or identity fraud, manage to acquire from an MNO (Mobile Network Operator) a replacement SIM card for an existing MSISDN (Mobile Number) that belongs to someone else. Once they have such a SIM card they can send and receive SMS messages and voice calls using the MSISDN belonging to the other person, thus escalating to another level their ability to impersonate the victim. In particular they can pass through automated SMS or voice call two-factor authentication systems used by banks and other financial institutions as if they were the victim because they can receive SMS messages and voice calls sent to the victim's MSISDN.

Most banks and financial institutions have been using systems to try to detect SIM card fraud for a long time; in some cases, for decades. There are also a number of patents and patent applications covering such methods. Well-known systems and methods are based on the very simple idea of checking whether the SIM card has changed. Every SIM card has an associated IMSI (International mobile subscriber identity), which is unique, so checking if the SIM card has changed can be trivially done by checking if the associated IMSI has changed. Whenever a financial institution needs to send sensitive information (for example the One Time Password used by two-factor authentication systems) to a certain MSISDN the system checks whether the IMSI associated with that MSISDN has changed (and hence the SIM Card has changed). If it has not changed, the assumption is that no fraud has taken place. If it has changed, then fraud might or might not have taken place, and, given the unquantified uncertainty, financial institutions normally assume that it has. They would typically block sending any confidential information (such a One Time Password) to that MSISDN until the person calls the financial institution's call centre number, authenticates using some other means, and asks for the number to be unblocked.

A problem with existing systems and methods, based on a simple "is the IMSI the same or not?" check, is that they can't quantify the probability of fraud when the IMSI changes, so systems and companies using these methods are forced to assume that every IMSI change is fraud.

This is a major drawback because it means that every legitimate change of SIM card (because the original SIM card is replaced, or because the MSISDN is ported to a different mobile network) requires manual intervention, increasing call centre costs and downgrading the customer's user experience. This is significant particularly because a sizeable proportion of users port their MSISDN to a different network as frequently as each year.

Even when SIM fraud is actually taking place the inability of these methods to go beyond a simple "has the SIM/IMSI changed or not?" might cause increased costs and decreased customer experience. The fact that a call centre is constantly having to deal with customer support calls about SIM swaps that turn out to be legitimate and where the block needs to be manually lifted might mean call centre agents are less suspicious when dealing with a call about a SIM swap that is actually fraudulent.

Also, once a SIM swap fraud has been discovered and the MSISDN is re-associated with the original IMSI, these methods may fail to recognise that this further change in IMSI is not actually yet another SIM swap fraud because the "new" IMSI is actually the same, original IMSI that had been in use for a long time by the rightful owner of the MSISDN and that is associated with a SIM that is, or at least was, in their physical possession and so that should be given an inherent level of trust that is higher than the one attached to a never-seen-before IMSI. So once the SIM swap fraud has been discovered and reverted the legitimate owner of the MSISDN still might have to call the call centre of their financial institutions and go through extensive checks to re-enable messages to their SIM despite the fact that they are using the same SIM they had been using for years.

In summary, existing systems and methods based on a simple IMSI check provide a simple Yes/No answer that produces a large number of false positives, increasing call centre costs and damaging the customer experience. The reason existing systems use this simple IMSI check method, despite its limitations, is that it is hard to devise a better method for detecting SIM fraud.

WO/2011/008140 (Ericsson), WO/2013/135898 (MOQOM) and GB2517276 (Validsoft) describe approaches to SIM fraud in which IMSI checks are performed.

The invention is directed towards achieving improved SIM fraud detection.

### Summary of the Disclosure

The invention provides a method performed by a SIM fraud detection system as set out in claim 1, and optional features of the method as set out in claims 2 to 13.

We also describe a SIM fraud detection system as set out in claim 14..

We also describe a non-transitory computer readable medium as set out in claim 15.

### Detailed Description of the Invention

The invention will be more clearly understood from the following description of some embodiments thereof, given by way of example only with reference to the accompanying drawings in which:

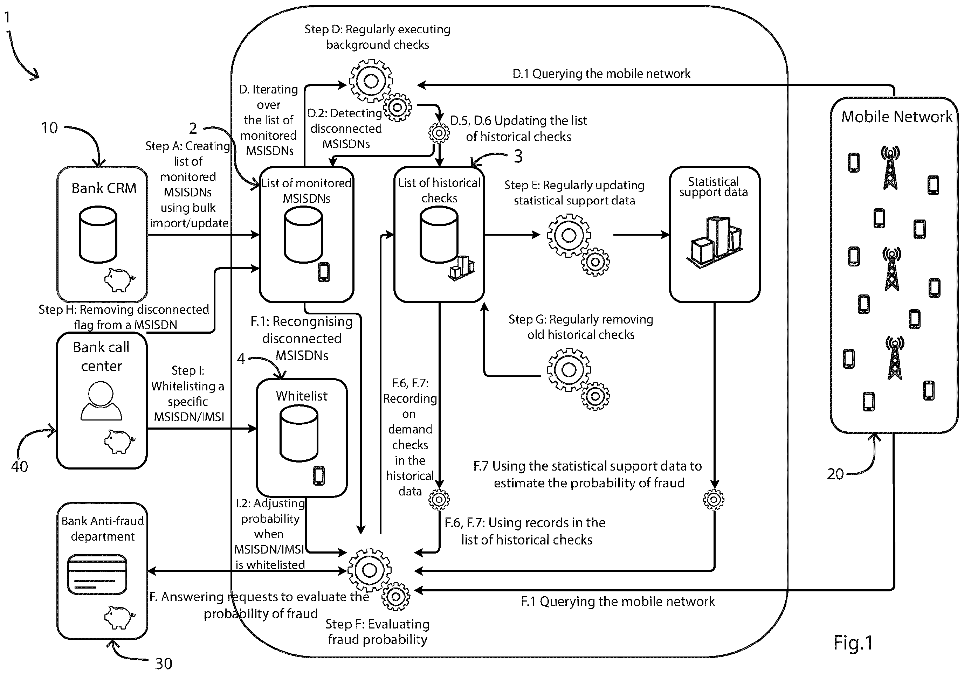

Fig. 1 is a flow diagram of a SIM fraud detection method of the invention.

We describe a SIM fraud detection system 1 and its method of operation. In hardware terms the system comprises digital data processors with memory circuits, data storage, and communication interfaces, preferably located in the Cloud. It interfaces with probes in mobile networks, and these probes may be an integral part of the system or they may be external, the system having interfaces configured to communicating in real time with such probes operated by mobile network operators.

The SIM fraud detection system 1 stores a current list 2 of monitored MSISDNs. Also, it maintains a set of historical check records 3 by regularly performing background checks each by querying a mobile network 20 probe to determine the IMSI and MCC/MNC associated with each monitored MSISDN at a point in time, storing the results in the historical check records, including at least for some historical check records stability flags that describe the relationship of the current record with other, previous and subsequent, historical records for the same MSISDN, and updating said stability data, by iterating over a plurality of historical records. The stability data is important because stability after an IMSI change is considered an indication that the change was legitimate, while instability is considered an indication of a fraudulent change. This allows statistical methods based on the historical frequency of fraudulent and non-fraudulent changes across the entire base of monitored MSISDNs to be used to estimate the probability that a new change is fraudulent In real time, the system responds to on-demand checks by estimating the probability that a monitored MSISDN has been fraudulently associated with a mobile device by querying a mobile network probe for a current IMSI and MCC and MNC associated with the MSISDN, using these fields and the information in the set of historical check records, including the frequency of similar checks that were or were not followed by a period of IMSI stability, to generate a probability of fraud, and adding an historical check record recording the on-demand check.

In more detail, he method of operation of the system 1 includes:
storing or accessing a current list (2) of monitored MSISDNs, and
maintaining a set of historical check records (3) by regularly performing background checks by querying a mobile network probe to determine the IMSI and MCC/MNC associated with each monitored MSISDN at various points in time and storing the results in the historical check records.

These steps set up the system and maintain it in a continuous manner so that it can handle real time on-demand requests for a response estimating the probability that a monitored MSISDN has been fraudulently associated with a mobile device from financial institution systems. The system responds to such a real time on-demand request by:
querying a mobile network (20) probe for a current IMSI associated with the MSISDN, extracting a country (MCC) and/or network (MNC) field from the IMSI, and
using the extracted field or fields and the information in the set of historical check records to generate a probability of fraud.

It is a major advantage and differentiator from the prior art is that the system maintains in a background mode the historical check records, and handles real time on-demand checks by providing an estimate of probability of fraud.

The historical check records are preferably also updated in real time upon completion of on-demand check by recording the on-demand check.

The calculation of the probability of fraud uses not just historical check records for that MSISDN but also historical check records for other MSISDNs, including the results of past on-demand checks. This is very advantageous to calculate the probability of fraud whenever fraud is being suspected.

The MSISDNs are encrypted in the list of monitored MSISDNs and it is advantageous that they can be decrypted to iterate over the list for background checks. In the list of historical checks cryptographic hashing is used for MSISDNs and IMSIs instead. This, by its nature, does not permit decryption, but does permit performing a look-up: having a particular MSISDN in the table allows the system to find the records related to it by hashing the MSISDN and searching for the records with the same hash.

The system 1 also maintains a database 5 of statistical support data, which is a cache to speed up computations by storing pre-calculated information. It holds the results of a number of queries on the historical data so that they are immediately available during an on-demand check. This caching is not essential but it is done in many on-demand checks to speed up the responses to on-demand checks.

The invention provides a solution to the problem of achieving a reliable SIM fraud detection output in real time in which there is differentiation between fraudulent and non-fraudulent SIM swaps in historical data, and there is a full statistical analysis over historical data whenever changes in IMSI are detected. It provides a clear quantitative assessment of how likely it is that SIM fraud is taking place, and reduces the chances of false positives. The assessment uses historical data organised in such a way that a reliable output can be efficiently produced in real time. The result of some counts and calculations using information from the historical data may be cached for faster computation, termed in this specification "statistical support data".

Referring to Fig 1 a SIM swap fraud detection system 1 of the invention interfaces with a bank CRM (customer relationship management) system 10, a mobile network 20, a bank anti-fraud system 30, and a bank call center 40. The system 1 has interfaces for wide area network communication with these systems, and servers with digital data processors. The servers may be deployed at a central location with redundancy or in the Cloud. The system also includes, in hardware terms, a probe installed into the physical mobile network 20 that is able to query the IMSI associated with a particular MSISDN at the current time.

Functionally, the digital data processors are programmed to maintain a list of MSISDNs to be tracked, and in a preferred embodiment the records are encrypted. The system 1 maintains a list 2 of monitored MSISDNs, a list 3 of historical checks, and a whitelist 4. The list 2 interfaces primarily with the external CRM system 10 and the support system 40, the list 3 with the external anti-fraud system 30, and the list 4 with the support system 40 and the anti-fraud system 30. The lists 2 and 4 are refreshed at regular intervals, typically once per week, by connecting to the probe and, for each MSISDN that is being tracked, doing a "background check" that consists in querying the IMSI currently associated with it. The historical data is recorded in a table as described below. The system 1 initially receives a list of monitored MSISDNs as a bulk import, at a frequency suited to the bank's systems. This list is stored by the system 1, which iterates over the list and refreshes it. A query is received in real time from the network 20.

By maintaining the lists 2 and 4 by way of background checks the system 1 regularly tracks changes in the IMSIs for the associated population of MSISDNs to be tracked, providing a baseline of information on IMSI changes across the population.

The system 1 also maintains statistical support data 5 that is calculated from the historical data 3, and then updated at regular intervals. This statistical support data 5 is used by system 1, in addition to historical data for a particular MSISDN and to the IMSI returned by the probe as associated with the MSISDN, to estimate the probability that a fraudulent SIM swap for that MSISDN has occurred at the current time.

Upon request, it can analyze the situation of a particular MSISDN, determine its current situation, consider its history of IMSI changes, and use statistical methods to calculate from the historical data an estimate for the probability that a fraudulent SIM swap (as opposed to a non-fraudulent SIM swap, or no SIM swap) has taken place for that MSISDN.

The fraud-detection algorithms of the system 1 are configured with an assumption that a fraudulent SIM swap will typically be detected within a few hours or days of having occurred, so that an on-demand check at a time when a fraudulent SIM swap was taking place can be recognized in historical data because it returned a new IMSI, and this change of IMSI was almost immediately followed (in the following background checks) by further changes of IMSIs (when the person who suffered the fraud gets a new SIM), or by the MSISDN being taken off the list of tracked MSISDNs (when the person who suffered the fraud gets a new MSISDN). A non-fraudulent SIM swap instead can be recognized in historical data by noticing that it is a one-off IMSI change that is followed by a period of IMSI stability. So the method assumes that this "IMSI stability" is a reliable indicator of whether a change of IMSI was fraudulent or not.

The system records the historical data in a way that makes it very fast to calculate the probability that a new SIM swap is fraudulent. On-demand checks are stored in the list of historical checks with the key characteristics of the situation that were available at the time of the check. The on-demand check records are later updated to flag whether they were followed or not by a period of IMSI stability, which is considered an indication of whether fraud was actually taking place at the time or not. When a new on-demand check is to be performed its key characteristics can then be compared to the ones of past checks and, considering the frequency of similar checks that were followed (or not) by a period of IMSI stability, a probability that the current check will also be followed (or not) by a period of IMSI stability (and hence the probability that fraudulent SIM swap is taking place) can be determined. The method first does this comparison and calculations with the richer data available, including the mobile network before and after the swap and other stability parameters, such as the so-called "stability period". The processors are configured to determine if the result is statistically significant enough to be used. If the result is too imprecise to be of use (because the historical data is not rich enough) then the processors reduce the number of parameters used until it gets to a statistically significant enough result. If that is not satisfactory, the processors generate a default output of a certain (configurable) probability (for example, 1%) of a fraudulent SIM swap, in case a SIM swap has taken place.

The historical data 3 table has a structure that contains the following information:
- (timestamp) the date of the check;
- (string) the mobile number that was checked (optionally cryptographically hashed in a non-reversible way);
- (Boolean) the result of the check ("Successful" if an IMSI was returned, and "Failed" if no IMSI was returned);
- (string) the IMSI that was associated with the number at the time of the check;
- (optionally cryptographically hashed in a non-reversible way);
- (shortint) the mobile network that was associated with the IMSI at the time of the check;
- (enum) the type of check:
   0 if it was a background check,
   1 if it was an on-demand check and the situation was not suspicious of SIM swap fraud,
   2 if it was an on-demand check and the situation was suspicious of SIM swap fraud, and
   3 if it was an on-demand check and the situation was highly suspicious of SIM swap fraud.
- (Boolean) the "stability" field, which is set to 0 for unstable IMSI changes and to 1 for stable IMSI changes. An IMSI change is stable if it is followed by a (configurable) period of IMSI stability, suggesting that the IMSI change was a legitimate, non-fraudulent, IMSI change (this field is set only for Successful checks of type = 2; it is first set to 0 and only updated to 1 if a period of IMSI stability is later seen);
- (shortint) the "previous" mobile network, associated with the IMSI in the previous background check for the same MSISDN (if any);
- (shortint) the "stability period", the number of hours since the oldest check of any type for the same MSISDN that returned the same IMSI, and with the property that there is no later check of any type for that MSISDN that returned a different IMSI. The expectation is that the stability period is correlated with the probability that the IMSI change will be a "stable change".

The processors regularly (typically once per week) iterate over all of the MSISDNs in the tracked list 2, and for each query its current IMSI using the in-network probe. They then insert the results of the check into the historical data table 2. This provides a set of background information on the changes of IMSIs.

Whenever the processors perform an on-demand check to assess the probability that a certain MSISDN is associated with a fraudulent IMSI or not, the details of the on-demand check will also be stored in the historical data table 3; if the situation is suspicious (based on a number of heuristic checks) then characteristics of the check are recorded. The characteristics include the "network", the "previous network", and the "stability period". These are key pieces of information that are available at the time of the check.

The processors maintain a "stability" field in the historical check table 3. This is initially set to 0 ("unstable change"), but, if the background monitoring of the IMSI changes in the following period (for example, 2 weeks) indicates that the IMSI remains stable for a configurable period of time it will change the stability field to 1 ("stable change"). The stability field is considered a good indication of whether SIM swap fraud was actually taking place or not; so a few weeks after the suspicious on-demand check the check record in the historical data table 3 will be ready to use for statistical purposes since it contains the characteristics (the relevant pieces of information available at the time of the check) and an indication of whether SIM swap fraud was actually taking place. By counting the frequency of past on-demand checks with certain characteristics where SIM swap fraud was taking place, or not taking place, the processors can automatically estimate the probability that SIM swap fraud will be taking place, or not taking place, when an on demand check with the same characteristics is done in the future.

The way the historical data 3 is maintained means that the system can calculate the probability of a fraudulent SIM swap very quickly. It uses the in-network probe to determine the IMSI currently associated with the mobile number. If the IMSI is the same as the one that was returned in at least 3 past background checks, meaning (in the assumption that background checks are weekly) that it has been in use in the past for 2+ weeks, then the probability of fraudulent SIM swap fraud is very low, and is typically estimated at 0%.

If the IMSI is the same as the one that was returned in all the checks in the last 2 weeks, then the probability of fraud is again very low, and is typically estimated at 0%.

If there are no previous background checks for this MSISDN (so it is a newly monitored MSISDN), but there are on-demand checks for the MSISDN that returned a different IMSI, the situation is very unusual and it needs to be flagged. In this case the probability of fraud is normally returned as 100%.

If these conditions are not met, then the on-demand check is deemed "suspicious", and the characteristics (network, previous network, stability period) of the check are calculated, and the statistical data support table is used to look up the probability of fraud for an on-demand check with these characteristics.

In all cases, the software will also insert a record in the historical data table 3 to record the SIM Swap check, following the same rules described above for recording historical data.

When updating the statistical data support structures, the processors iterate over all the relevant characteristics to count the frequency of stability field "stable change" and "unstable change" checks with these characteristics:
- It counts "Successful", "suspicious" "on-demand" check records in the historical data that are at least 30 days old and that have the stability field set to 0 ("unstable change") or set to 1 ("stable change").
- It groups the results by the relevant characteristics: network, previous network, and stability period (typically grouping together checks where stability period is less than 48 hours and where stability period is above 48 hours), producing a number of frequency counts. For purposes of understanding, the letter "UC" denominates the count for the stability field set to 0, and "SC" denominates the count for it being set to 1.
- If UC+SC>0, and (2/(UC+SC+4))*sqrt((UC*SC/(UC+SC))+1) < K, where K is by default 0.1 but can be made smaller or larger to make the check more or less strict, then it calculates the probability of a fraudulent SIM swap as the maximum between 0.01% (or another fixed percentage) and (UC+2)/(UC+SC+4). For example, if UC=10 and SC=1000, the estimated probability of fraud would be 1.18%, while if UC=8000 and SC=50000, the estimated probability of fraud would be 13.8%.
- If these conditions (UC+SC>0, and (2/(UC+SC+4))*sqrt((UC*SC/(UC+SC))+1) < K) are not satisfied, it counts and groups again discarding some of the information in the characteristics fields. Typically, it would first drop the network, replacing it with a "unchanged network" attribute that is set to True if the network is the same as the previous network, and to False it isn't. So it would count UC and SC as before, but grouping just by "previous network", "unchanged network", and "stability period" (instead of grouping by "previous network", "network", and "stability period").
- If UC+SC>0, and (2/(UC+SC+4))*sqrt((UC*SC/(UC+SC))+1) < K, where K is by default 0.1 but can be made smaller or larger to make the check more or less strict, then it calculates the probability of a fraudulent SIM swap as the maximum between 0.01% (or another fixed percentage) and (UC+2)/(UC+SC+4). For example, if UC=10 and SC=1000, the estimated probability of fraud would be 1.18%, while if UC=8000 and SC=50000, the estimated probability of fraud would be 13.8%.
- If these conditions (UC+SC>0, and (2/(UC+SC+4))*sqrt((UC*SC/(UC+SC))+1) < K) are not satisfied, it counts and groups again discarding more of the information in the characteristics fields. Typically, it would now drop the previous network. So it would count UC and SC as before, but grouping just by "unchanged network", and "stability period" only. If, using the formulas above, this results in a valid probability of fraud, it would stop; otherwise, it would drop more information, typically grouping only by stability period. If that also doesn't result in a valid probability it would finally do no grouping and just count how many records with a stable change and an unstable change there are.
- If these conditions (UC+SC>0, and (2/(UC+SC+4))*sqrt((UC*SC/(UC+SC))+1) < K) are still not satisfied, it uses 1% (or some other configurable default value) as the probability of fraudulent SIM swap.

Once the statistical data support table has been populated as described it can be used to estimate the probability of fraud of any suspicious on-demand check. The calculations of the statistical support table 5 are simple enough that they even could be done on the fly, using the historical table data 3, for every suspicious on-demand check. But using the statistical support data 5 speeds up the calculations because it removes the need to query a large number of records in the historical table 3 used by on-demand checks whenever the checks can easily be classified in a limited number of groups by using their characteristics, and so that is how normally the calculations are done.

It will be appreciated that the method doesn't simply execute on-demand checks by comparing the current IMSI with a stored IMSI. It uses historical data coupled with targeted, statistical and logical rules to be able to evaluate the probability of fraud in each specific situation.

### Detailed Examples

The following sets out a detailed technical method performed by the digital data processors of the system using the data tables 2, 3, 4, and 5, and also variations of the method in various examples.
A. Creating the list 2 of monitored MSISDNs, optionally encrypting them. This list is updated regularly. MSISDNs in this list can also later be flagged as "disconnected" to mean that they have been disconnected from the mobile network for a sustained period of time (configurable, but typically 25+ weeks) and so they should not be trusted until they have been manually revalidated as they could have been reallocated to another person when they are connected to the network again.
B. Creating the initially-empty list 3 of historical checks. This is in tabular format and each check record of this table contains a timestamp of the check, a hashed MSISDN, a status of the check ("Successful" if the method could determine the IMSI, and "Failed" if it couldn't), a hashed IMSI (if it got one), a small integer (the "network field") representing the MCC/MNC (if it got one), and a small integer representing the type of check (0 if it is a "background check", 1 if it is a "not suspicious" "on demand" check, 2 if it is a "suspicious" "on demand" check, and 3 if it is a "very suspicious" "on demand" check). For "Successful" "suspicious" "on demand" checks a number of other parameters are also recorded: a Boolean (the "stable change" field) that is set to 1 for stable IMSI changes and to 0 for unstable IMSI changes, a small integer (the "previous network field") representing the MCC/MNC of the most recent "background" check for the same MSISDN (if any), and a small integer (the "stability period") representing the number of hours since the oldest check of any type for the same MSISDN that returned the same IMSI, and with the property that there is no later check of any type for that MSISDN that returned a different IMSI. The "stability period" integer is optionally capped at a fixed, configurable number (typically 336, the numbers of hours in 2 weeks).
C. Creating the statistical support data structure 5. This is a list of records where each record will contain the currently estimated probability of fraud for a successful "suspicious on-demand" check with certain characteristics. The list contains a record for each combination of characteristics including some or all of current network, previous network, and a stability period range (typically simply having two ranges: one for stability periods less than 48 hours and one for stability periods over 48 hours). For example, if the system is used in a country with 3 main networks, and if 2 stability period ranges (less than 48 hours and 48 hours or more) are used, then there would be 3 * 3 * 2 = 18 combinations, and hence 18 records in the statistical support list. Each record would store the "network", the "previous network", the "stability period" range, and the estimated probability of fraud for a "suspicious on demand check" that matches this combination. At the beginning these records are created and are all assigned a default probability of fraud of 1% (or another fixed default probability).
D. Iterating over the list 2 of monitored MSISDNs over a configurable refresh period (typically one week), optionally excluding any "disconnected" MSISDNs, and for each one executing a "background check" by:
   D.1 Querying the mobile network 20 for the current IMSI associated with the MSISDN.
   D.2 If the IMSI lookup fails because there is no IMSI currently associated with the MSISDN, then:
      D.2.a Inserting a new record into the list of historical checks using the current timestamp, the hashed MSISDN, and "Failed" as the status
      D.2.b If there are at least 25 (or some other configurable number) background checks before this one that are also "Failed", and if there are no successful checks of any type for this MSISDN in the last 6 months (or some other configurable interval), then marking the MSISDN itself as "disconnected" in the list of monitored MSISDNs and optionally raising an alert so that the user can be contacted to confirm whether they have changed MSISDN
      D.2.c Ending this background check and moving onto the next MSISDN in the list.
   D.3 Extracting the MCC and MNC from the IMSI.
   D.4 Mapping the MCC and MNC into a small integer ("network field") that represents the mobile network that the IMSI belongs to.
   D.5 Inserting a new record into the list of historical checks using the current timestamp, the hashed MSISDN, a "Successful" status, the hashed IMSI, the "network field", and 0 ("background check") as type of check.
   D.6 Updating existing records in the list of historical checks to support the later statistical analysis: If there were at least 2 (or some other configurable number) existing records in the list of historical checks with the same hashed MSISDN, a "Successful" status, the same hashed IMSI, and a type of 0 ("background check"), then any "Successful" "suspicious on demand" checks in the historical check list for the current MSISDN and IMSI with the "stable change" field set to 0 ("unstable change") are updated setting the "stable change" field to 1 ("stable change").
E. At configurable regular intervals (typically once per day) updating the statistical support data structure, by iterating over all the records in the list and for each record:
   E.1 Counting "UC", the number of records in the historical check table of type "suspicious on demand" check with status "Successful", which are at least 30 days (or other configurable interval) old, have the same characteristic as the statistical support list record (same "network field", same "previous network field", and the "stability period" in the range associated with the statistical support list record), and have the "stable change" field set to 0 ("unstable change").
   E.2 Counting "SC", the number of records in the historical check table of type "suspicious on demand" check with status "Successful", which are at least 30 days (or other configurable interval) old, have the same characteristic as the statistical support list record (same "network field", same "previous network field", and the "stability period" in the range associated with the statistical support list record), and have the "stable change" field set to 1 ("stable change").
   E.3 If UC + SC > 0, and if (2/(UC+SC+4))*sqrt((UC*SC/(UC+SC))+1) < K (or using other statistical formulas to estimate the statistical confidence of using the frequency counts), where K is by default 0.1 (but can be made smaller or larger to make the check more or less strict), then updating the record with an estimated probability of fraud which is the maximum between 0.01% (or another fixed, default percentage) and (UC+2)/(UC+SC+4) (or some other statistical formula based on UC and SC), and moving onto the next record. For example, if UC=10 and SC=1000, the estimated probability of fraud would be 1.18%, while if UC=8000 and SC=50000, the estimated probability of fraud would be 13.8%.
   E.4 Else repeating steps E.1., E.2., and E.3. using less strict matching of characteristics in the counting:
      E.4.a In steps E.1. and E.2. counting not just records with exactly the same characteristics, but all records with the same "previous network field", with the same Boolean "unchanged network" attribute (defined as True if the "previous network field" and the "network field" are the same, and as False if they are not) and with a "stability period" in the relevant range. This step is optional.
      E.4.b If step E.3 again fails to produce an estimated probability of fraud, then repeating steps 1. and 2. but counting not just records with exactly the same characteristics, but all records with the same "previous network field" and with a "stability period" in the relevant range. This step is optional.
      E.4.c If step E.3 again fails to produce an estimated probability of fraud, then repeating steps 1. and 2. but counting not just records with exactly the same characteristics, but all records with the same Boolean "unchanged network" attribute (defined as True if the "previous network field" and the "network field" are the same, and as False if they are not) and with a "stability period" in the relevant range. This step is optional.
      E.4.d If step E.3 again fails to produce an estimated probability of fraud, then repeating steps 1. and 2. but counting not just records with exactly the same characteristics, but all records with a "stability period" in the relevant range. This step is optional.
      E.4.e If step E.3 again fails to produce an estimated probability of fraud, then repeating steps 1. and 2. but counting records regardless of the characteristics (the "network field", the "previous network field", and even the "stability period"). This step is optional.
   E.5 If a probability of fraud still couldn't be calculated, updating the record with the default probability of fraud of 1% (or another fixed default percentage) and moving onto the next record.
F. Performing "on demand" checks to answer requests to evaluate the probability that a monitored MSISDN has been fraudulently associated with a mobile device controlled by the rightful owner as follows:
   F.1 If the MSISDN is flagged as "disconnected" in the list of monitored MSISDNs, returning an error or, if an error can't be returned, returning 100% (or some other high, default value) as the probability of fraud, and terminating the on-demand check.
   F.2 Querying the mobile network for the current IMSI associated with the MSISDN.
   F.3 If the IMSI lookup fails because there is no IMSI currently associated with the MSISDN, then:
      F.3.a Inserting a new record into the list of historical checks using the current timestamp, the hashed MSISDN, "Failed" as the status, "suspicious on demand" check as type.
      F.3.b Returning an error and terminating the on-demand check.
   F.4 Extracting the MCC and MNC from the IMSI.
   F.5 Mapping the MCC and MNC into a small integer ("network field") that represents the mobile network that the IMSI belongs to.
   F.6 Using the records in the list historical checks to return a probability of fraud in common situations (and recording this check itself in the list of historical checks):
      F.6.a Returning 0% (or some other low, default value) as the probability of fraud, inserting a "not suspicious" "on demand" record into the list of historical checks, and terminating the on demand check if the list of historical checks contains at least 3 (or other configurable number) records with a "Successful" status, the same hashed MSISDN and hashed IMSI, and a type of 0 ("background check") and the last such record is not older than 30 days (or other configurable interval).
      F.6.b Returning 0% (or some other low, default value) as the probability of fraud, inserting a "not suspicious" "on demand" record into the list of historical checks, and terminating the on demand check if all the checks in the list of historical checks for the last 2 weeks (or other configurable period) that have a "Successful" state returned the same IMSI. Note that this condition is always matched if in the list of historical checks there are no checks for this MSISDN, or no checks for this MSISDN returning a different IMSI.
      F.6.c Returning 100% (or some other high, default value) as the probability of fraud, inserting a "very suspicious" "on demand" record into the list of historical checks and terminating the on-demand check if there is no "Successful" background check for this MSISDN but there is a "Successful" check of a different type returning a different IMSI.
   F.7 Otherwise, using the statistical support list to estimate the probability of fraud, and recording the current check in the list of historical checks:
      F.7.a Finding in the list of historical checks the most recent "Successful" "background" check for that MSISDN that returned a different IMSI. The "previous network field" of the current "on demand" check will be set to the "network field" of this historical "background" check record.
      F.7.b Calculating the "stability period" as the number of hours since the oldest "Successful" check of any type for that MSISDN that returned the same IMSI, and with the property that there is no later "Successful" check of any type for that MSISDN that returned a different IMSI. The "stability period" can be zero if there is no check in the list of historical checks satisfying the conditions. If the "stability period" is over a configurable number (typically 336, the number of hours in 2 weeks) it is optionally limited for simplicity to that number.
      F.7.c Looking up the record with the given "network field", "old network field", and with the appropriate "stability period" range from the statistical support list, and using the estimated probability of fraud from that record as the estimated probability of fraud for the current on demand check. F.7.d Inserting a record in the list of historical checks using the current timestamp, the hashed MSISDN, a "Successful" status, the hashed IMSI, the "network field", 2 ("suspicious on demand check") as "type of check", 0 ("unstable change") as the "stable change" field, the previous network as the "previous network" field, and the stability period as the "stability period". Optionally storing the estimated probability of fraud in the record or in a separate table so that the performance of the method can later be assessed and statistical parameters can be tuned.
      F.7.d Returning the probability of fraud just estimated in step 3.
G. Optionally at configurable regular intervals (typically once per day) removing records that are over 2 years old (or another configurable interval) from the list of historical checks.
H. Responding to human agent requests to remove the "disconnected" flag from an MSISDN by:
   H. a Removing the disconnected flag from the list of monitored MSISDNs.
   H. b Optionally also deleting all historical check records for that MSISDN.
I. Responding to human agent requests to temporarily override the statistical analysis and to "whitelist" the latest IMSI associated with a certain MSISDN by:
   I. a Adding to a temporary "whitelist" a record with the current timestamp, the hashed MSISDN, the hashed IMSI, and the maximum probability of fraud for the combination as assessed by the human agent.
   I. b Adjusting the probability of fraud returned by "on demand" checks for MSISDNs and IMSIs that are in the whitelist to take into account the human agent confidence recorded in the whitelist. Typically, the returned probability would be limited to be no more than (or exactly the same as) the maximum probability of fraud assessed by the human agent.
   I. c Optionally recording "whitelist" requests in a separate table so that the performance of the method can later be assessed and statistical parameters can be tuned.
   I. d Deleting records from the "whitelist" a number of days (typically 7 or 14 days) after they have been inserted.

It will be appreciated that the system uses statistical methods to produce a probability (from 0% to 100%) that a fraudulent SIM swap (as opposed to a non-fraudulent SIM swap, or no SIM swap) has taken place. To calculate the probability, it uses not just the IMSI, but also the mobile network that each IMSI belongs to (which can be deducted from the IMSI) before and after the swap, and the history of IMSI changes and of past checks across the entire population of monitored MSISDNs.

The system is therefore able to differentiate between fraudulent and non-fraudulent SIM swaps by analysing historical data, specifically by looking at what happens to the SIM/IMSI associated with a mobile number over the medium term (about a month in some examples).

The invention can also take advantage of the fact that an IMSI lookup implicitly returns the MNO that the SIM card belongs to. This is relevant because different MNOs have different security controls and measures in place when supplying replacement SIM cards to customers, and so fraudsters might target particular MNOs when committing SIM swap fraud, which means that the probability of SIM swap fraud does depend on the MNO before and after the swap. All existing SIM swap fraud detection methods, based on a simple "is the IMSI the same or not?" approach, are unable to take advantage of the MNO information implicitly returned by an IMSI lookup (they discard it) and are unable to differentiate the probability of SIM fraud depending on the MNO before and after the swap in the way that this invention does.

It will be appreciated that the automated technical fraud detection method successfully addresses the issue of detecting "deactivated" MSISDNs. Also, it facilitates, and benefits from, call centre agents "whitelisting" a particular MSISDN/IMSI.

A major advantage is that it overcomes the problem of there being too many false positives. This is a major advantage, because for example in Ireland about 5% of subscribers port their mobile number to a different network each year.

For performance reasons it is beneficial, but not essential, that the system's processors maintain the separate statistical data structure or table 5 that is updated regularly based on the historical data.

Despite the fact that the method's evaluation of the probability of fraud is accurate, it is a probability and so there will be some cases in which manual intervention is needed, for example if a user, immediately after a legitimate SIM swap, needs urgent access to communications to their MSISDN from the financial institution. For this reason, the system 1 is configured to allow authorised humans to manually override the system's estimates of the probability of fraud for a certain MSISDN/IMSI. For example, if a user gets a replacement SIM for their MSISDN and tries to use immediately afterwards an online banking facility that requires them to receive a One Time Password via SMS to their MSISDN, the system 1 is likely to estimate that the probability of fraud is high and so the financial institution might decide to block the One Time Password. In that case as a last resort the user can still contact the financial institution's support staff and, after going through extensive identity validation, they can ask for their MSISDN/IMSI to be unblocked. This allows a financial institution's customer care agent in this case to manually override the probability of fraud to allow the One Time Password to be sent out. Alternatively, the user would have to wait for a period of time until the new IMSI is well established and the probability of fraud assessed by the method will have decreased below the threshold that allows the financial institution to be confident that the One Time Password can be sent out without further checks, but because there are situations where the user needs urgent access and cannot wait, the method has provisions to allow the probability of fraud to be manually overridden.

The system 1 can also identify cases where a certain MSISDN is no longer in use but the person has failed to inform the financial institution that their MSISDN has changed. A MSISDN which is no longer in use (because the user, or the mobile network, has terminated the mobile service subscription) typically remains disconnected for a (normally relatively long) period of time before being reallocated to a new user. So, if the financial institution hasn't been informed that a user is no longer using a certain MSISDN the financial institution not only won't be able to contact them over the phone, but later on risks sending confidential information (such as One Time Passwords or credit card alerts) to the wrong person when/if the MSISDN is reallocated to another user.

When an MSISDN is no longer in use there won't be any SIM/IMSI associated with it and so an IMSI lookup for the MSISDN will return nothing. A single check failing isn't enough to determine that the MSISDN has been disconnected, though, because an IMSI lookup for an active MSISDN will also fail to return anything if the mobile phone is simply turned off or has no network coverage. What the system 1 does to detect disconnected MSISDN, instead, is to monitor the historical table of checks for long sequences of failures for the same MSISDN. If all the background and on-demand checks for a certain MSISDN fail to return an IMSI for a very long period of time (such as 6 months, but this can be configured depending on the rules in the country where the system is running) then the system 1can safely assume that the MSISDN has been disconnected; in this case it would flag the MSISDN as disconnected and can also be configured to automatically alert the financial institution so that it can try to contact the user by other means to ask them to confirm what their new MSISDN is.

The system 1 allows an MSISDN that has been disconnected to be reconnected manually by an agent of the financial institution. The system in that case will simply clear the "disconnected" flag from the MSISDN, and optionally also delete all the related records in the historical table to reset the situation for that MSISDN.

### Major Advantages and Differences from the Prior Art Approaches

The method of the invention is significantly different from prior art approaches. In the present invention the system outputs a variable probability of fraud (an actual number from 0% to 100% which depends on the particular change), and not just a binary Yes/No "possibility of fraud" answer when the details for a particular MSISDN change.

The method of the invention stores and uses historical information on the changes in IMSIs and in MCCs/MNCs (mobile country codes and mobile network codes) across the entire base of MSISDNs being monitored. Prior art methods typically only store a trusted (or last known) value of the IMSI for a particular MSISDN as it is not obvious how to use earlier historical information. In this invention we disclose a method which makes use of the full historical information to provide a refined probability of fraud. To use the historical information the invention has an advantageous approach whereby it classifies past IMSI changes as fraudulent or non-fraudulent depending on whether the changes were "stable" or not; this is because legitimate changes are stable while fraudulent changes are not. While this criterion can't be used when examining an IMSI change in progress (as it can't determine if the change will be stable or not in the future) it can be used to classify past changes as fraudulent or non-fraudulent. This novel approach allows an anti-fraud system to calculate the frequency of fraudulent and non-fraudulent changes in the historical data depending on the characteristics of the changes, and hence, using statistical methods, to calculate an expected probability that a change of a certain type is fraudulent or not. This probability can then be used as fraud probability for an in-progress change when its characteristics are known. The prior art methods do not suggest this.

The historical information approach of the invention's method allows it to also use more information than prior art methods. In the base case it uses not only the IMSI but also the MCC/MNC associated with an MSISDN at a point in time. This information can be obtained with the IMSI but it is normally discarded by prior art methods as it is not obvious how to use it.

Even the approach of WO/2011/008140, which might return "an indication of whether or not the stored mobile subscriber identity number and the received mobile subscriber identity number have been issued by the same mobile network operator" is unable to use the information for any useful purpose other than checking if the information is the same than it was before; it can't distinguish between different types of changes (e.g. from operator 1 to operator 2 versus from operator 1 to operator 3) and this prior art method doesn't include any actual indication of how to use the information that the network has changed, other than returning it to the caller.

On the other hand, in the present invention, we disclose use of the MCC/MNC information in full to provide a refined probability of fraud. This relies on the assumption that how easy/frequent SIM swap fraud is depends on how easy it is to get a replacement SIM, which depends on the mobile network operators before and after the change. So, knowing how the MCC/MNC changes (and not just that it changes, as in the prior approaches) allows the system of the invention to refine statistical calculations and to produce a better estimate of the probability of fraud. The prior art methods do not suggest this.

Another major difference and advantage from the prior art methods is that the present invention's method, when examining the situation for a particular MSISDN, uses not only the historical information for that MSISDN, as prior art methods do, but also uses the historical information for all the other MSISDNs being monitored. The ability of the method disclosed in this patent application to use more information than prior art methods is what allows it to provide a more sophisticated result in the form of an actual numerical estimate of the probability of fraud for a particular change.

### Modifications

The invention is not limited to the embodiments described but may be varied in construction and detail within the scope of the claims. For example, the statistical support data may not be present, in which case the whole set of queries that are used to populate the historical support data table for a certain combination of network, previous network, and stability period can be done each time an on-demand check is performed.

If the amount of MSISDNs to monitor is large enough, and hence the data available is large enough, the method of the invention can be modified in obvious ways to include time of the day and/or day of the week into the statistical calculations. It would be enough for example to standardize the time of the day into an enumerated value (such as the hour of day as an integer from 0 to 23, or 0 for day and 1 for night), record it with each check, and then use it in the statistical calculations in the same way that the MNCs/MCCs are used.

## Claims

1. A method performed by a SIM fraud detection system comprising digital data processors with memory circuits, data storage, and communication interfaces, the method comprising the steps of:
storing or accessing a current list (2) of monitored MSISDNs;
maintaining a set of historical check records (3) by regularly performing background checks each by querying a mobile network probe to determine the IMSI and country and/or network code data (MCC/MNC) associated with each monitored MSISDN at a point in time, storing the results in the historical check records, wherein at least some historical check records include stability data that describes a relationship of the current record with other, previous and subsequent, historical records for the same MSISDN;
updating said stability data by iterating over a plurality of historical records;
responding to a real time on-demand request for a check to provide a response estimating the probability that a monitored MSISDN has been fraudulently associated with a mobile device by:
(a) querying a mobile network probe for a current IMSI, MCC, and MNC associated with the MSISDN,
(b) using the output of (a) and the information in the set of historical check records, including the frequency of similar checks that were or were not followed by a period of IMSI stability, to generate a probability of fraud, and
(c) adding an historical check record recording the on-demand check.

2. A method of claim 1, wherein if the MSISDN is flagged as disconnected in the list of monitored MSISDNs, the system returns an error indicator or an alert of high probability of fraud.

3. A method of claims 1 or 2, wherein if the IMSI query step (a) fails because there is no IMSI currently associated with the MSISDN, then the system:
inserts a new record into the list of historical check records (3) using a current timestamp, the MSISDN, a failed status indicating flag, and a suspicious-indicating flag, and
returning an error and terminating the on-demand request.

4. A method of any preceding claim, wherein the MSISDNs are encrypted in the list (2) of monitored MSISDNs, and optionally MSISDNs and IMSIs are hashed when stored in the historical check records (3).

5. A method of any preceding claim, wherein in step (a) country and network fields are extracted and are mapped into a data item which represents the mobile network that the IMSI belongs to, and optionally the data item is an integer.

6. A method of any preceding claim, wherein the step (b) of determining a probability includes the sub-steps of:
if the list of historical check records contains at least a minimum, configured, number of background check records with a successful status flag for that MSISDN and IMSI, returning a low probability of fraud:
inserting an on-demand check record with a not-suspicious indicating flag into the list of historical checks, and
terminating the on-demand request.

7. A method of any preceding claim, wherein the step (b) of determining a probability includes the sub-steps of:
if all of the previous successful checks in the list of historical records for a recent, configured, time period for that MSISDN returned the same IMSI:
returning a low probability of fraud,
inserting an on-demand check record with a not-suspicious indicating flag into the list of historical checks, and
terminating the on-demand request.

8. A method of any preceding claim, wherein the step (b) of determining a probability includes the sub-steps of:
if in the list of historical checks there is no successful background check for this MSISDN but there is a successful on-demand check for this MSISDN returning a different IMSI:
returning a high probability of fraud,
inserting an on-demand check record with a very-suspicious-indicating flag into the list of historical checks, and
terminating the on-demand request.

9. A method of any preceding claim, wherein the processor uses said stability data as an indicator that a received on-demand request has similar or different characteristics to one or more other historical check record, and optionally characteristics used to compare historical check records include a previous mobile network field.

10. A method of any preceding claim, wherein the historical check records include some or all of the following items:
a timestamp of the check,
a hashed MSISDN,
a status of the check indicating success if the method could determine the IMSI,
and a fail if it couldn't,
a hashed IMSI,
an integer representing the MCC and/or MNC, and
an integer representing the type of check.

11. A method of claim 10, wherein the historical check records include some or all of the following items: a stability field which is set to stable or to unstable for IMSI changes, a previous network field item representing the MCC/MNC of the most recent background check for the same MSISDN, and a stability period item representing the time since the oldest check of any type for the same MSISDN that returned the same IMSI, and with the property that there is no later check of any type for that MSISDN that returned a different IMSI.

12. A method of any preceding claim, including steps of the system maintaining a cache of statistical support data gleaned from a plurality of background and/or on-demand historical checks for a plurality of MSISDNs, and said cache is read and support data processed in response to the on-demand request, to speed real time response time, and wherein said cache holds the results of a number of queries on the historical data so that they are immediately available during an on-demand check, and wherein results of at least some on-demand checks are stored in the historical check records with key characteristics of the situation that were available at the time of the check, and said records are later updated to flag whether they were followed or not by a period of IMSI stability, which is considered an indication of whether fraud was actually taking place at the time or not, and a new on-demand check is to be performed its key characteristics is compared to those of past on-demand checks and, considering frequency of similar checks that were or were not followed by a period of IMSI stability, a probability that the current check will or will not also be followed by a period of IMSI stability is determined.

13. A method of any preceding claim, wherein the historical records include records which are specific to particular historical checks, and each includes:
a timestamp) the date of a check;
the mobile number that was checked;
the result of the check, the result indicating success if an IMSI was returned, and
failure if no IMSI was returned;
the IMSI that was associated with the number at the time of the check;
the mobile network that was associated with the IMSI at the time of the check;
a flag indicating: the type of check, the categories including a background check,
an on-demand check and the situation was not suspicious of SIM swap fraud, if it was an on-demand check and the situation was suspicious of SIM swap fraud, and if it was an on-demand check and the situation was highly suspicious of SIM swap fraud;
a stability field, with a value for unstable IMSI changes and a value for stable IMSI changes;
the previous mobile network, if any, associated with the IMSI in the previous background check for the same MSISDN; and
a stability period indicating time since the oldest check of any type for the same MSISDN that returned the same IMSI.

14. A SIM fraud detection system comprising digital data processors and communication interfaces for communicating with external systems including mobile network probes, the processors being configure to perform a method of any of claims 1 to 13.

15. A non-transitory computer readable medium comprising software code for performing the method of any of claims 1 to 13 when executed by a digital data processor.

## Patentansprüche

1. Verfahren, durchgeführt von einem SIM-Betrugserkennungssystem, das digitale Datenprozessoren mit Speicherschaltungen, Datenspeicher und Kommunikationsschnittstellen umfasst, wobei das Verfahren die folgenden Schritte beinhaltet:
Speichern einer oder Zugreifen auf eine aktuelle(n) Liste (2) von überwachten MSISDNs;
Führen eines Satzes von historischen Prüfdatensätzen (3) durch regelmäßiges Durchführen von Hintergrundprüfungen, jeweils durch Abfragen einer mobilen Netzwerksonde, um die IMSI und Länder- und/oder Netzwerkcode-Daten (MCC/MNC) zu bestimmen, die zu einem Zeitpunkt mit jeder überwachten MSISDN assoziiert sind, Speichern der Ergebnisse in den historischen Prüfdatensätzen, wobei mindestens einige historische Prüfdatensätze Stabilitätsdaten enthalten, die eine Beziehung des aktuellen Datensatzes mit anderen, vorhergehenden und nachfolgenden, historischen Datensätzen für dieselbe MSISDN beschreiben;
Aktualisieren der genannten Stabilitätsdaten durch Iterieren über mehrere historische Datensätze;
Reagieren auf eine bedarfsgesteuerte Echtzeit-Anforderung einer Prüfung, um eine Antwort bereitzustellen, die die Wahrscheinlichkeit abschätzt, dass eine überwachte MSISDN in betrügerischer Weise mit einem mobilen Gerät assoziiert wurde, durch:
(a) Abfragen einer Mobilfunknetz-Sonde nach einer mit der MSISDN assoziierten aktuellen IMSI, MCC und MNC,
(b) Verwenden der Ausgabe von (a) und der Informationen in dem Satz von historischen Prüfdatensätzen, einschließlich der Häufigkeit ähnlicher Prüfungen, auf die eine IMSI-Stabilitätsperiode folgte oder nicht, zum Erzeugen einer Betrugswahrscheinlichkeit, und
(c) Hinzufügen eines historischen Prüfdatensatzes, der die bedarfsgesteuerte Prüfung aufzeichnet.

2. Verfahren nach Anspruch 1, wobei, wenn die MSISDN in der Liste von überwachten MSISDNs als unverbunden gekennzeichnet ist, das System einen Fehlerindikator oder eine Warnung über eine hohe Betrugswahrscheinlichkeit zurückgibt.

3. Verfahren nach Anspruch 1 oder 2, wobei, wenn der IMSI-Abfrageschritt (a) erfolglos verläuft, weil mit der MSISDN derzeit keine IMSI assoziiert ist, das System:
einen neuen Datensatz in die Liste von historischen Prüfdatensätzen (3) unter Verwendung eines aktuellen Zeitstempels, der MSISDN, eines den erfolglosen Status anzeigenden Flags und eines einen Verdacht anzeigenden Flags einfügt, und
einen Fehler zurückgibt und die bedarfsgesteuerte Anforderung beendet.

4. Verfahren nach einem vorherigen Anspruch, wobei die MSISDNs in der Liste (2) von überwachten MSISDNs verschlüsselt sind und optional MSISDNs und IMSIs gehasht werden, wenn sie in den historischen Prüfdatensätzen (3) gespeichert werden.

5. Verfahren nach einem vorherigen Anspruch, wobei in Schritt (a) Länder- und Netzfelder extrahiert und in ein Datenelement abgebildet werden, das das Mobilfunknetz darstellt, zu dem die IMSI gehört, wobei das Datenelement optional eine ganze Zahl ist.

6. Verfahren nach einem vorherigen Anspruch, wobei Schritt (b) des Bestimmens einer Wahrscheinlichkeit die folgenden Unterschritte beinhaltet:
wenn die Liste von historischen Prüfdatensätzen mindestens eine minimale, konfigurierte Anzahl von Hintergrundprüfdatensätzen mit einem Erfolgreichstatusflag für diese MSISDN und IMSI enthält, Zurückgeben einer niedrigen Betrugswahrscheinlichkeit:
Einfügen eines bedarfsgesteuerten Prüfdatensatzes mit einem Verdachtfreiheit anzeigenden Flag in die Liste historischer Prüfungen, und
Beenden der bedarfsgesteuerten Anforderung.

7. Verfahren nach einem vorherigen Anspruch, wobei Schritt (b) des Bestimmens einer Wahrscheinlichkeit die folgenden Unterschritte beinhaltet:
wenn alle vorherigen erfolgreichen Prüfungen in der Liste historischer Datensätze für eine kürzliche, konfigurierte Zeitperiode für diese MSISDN dieselbe IMSI ergeben haben:
Zurückgeben einer niedrigen Betrugswahrscheinlichkeit,
Einfügen eines bedarfsgesteuerten Prüfdatensatzes mit einem Verdachtfreiheit anzeigenden Flag in die Liste historischer Prüfungen und
Beenden der bedarfsgesteuerten Anforderung.

8. Verfahren nach einem vorherigen Anspruch, wobei Schritt (b) des Bestimmens einer Wahrscheinlichkeit die folgenden Unterschritte beinhaltet:
wenn es in der Liste historischer Prüfungen keine erfolgreiche Hintergrundprüfung für diese MSISDN gibt, aber eine erfolgreiche bedarfsgesteuerte Prüfung für diese MSISDN vorhanden ist, die eine andere IMSI ergibt:
Zurückgeben einer hohen Betrugswahrscheinlichkeit,
Einfügen eines bedarfsgesteuerten Prüfdatensatzes mit einem Hochverdacht anzeigenden Flag in die Liste historischer Prüfungen, und
Beenden der bedarfsgesteuerten Anforderung.

9. Verfahren nach einem vorherigen Anspruch, wobei der Prozessor die genannten Stabilitätsdaten als Indikator dafür verwendet, dass eine empfangene bedarfsgesteuerte Anforderung ähnliche oder andere Charakteristiken als ein oder mehrere andere historische Prüfdatensätze hat, und wobei optional zum Vergleichen historischer Prüfdatensätze verwendete Charakteristiken ein früheres Mobilfunknetz-Feld umfassen.

10. Verfahren nach einem vorherigen Anspruch, wobei die historischen Prüfdatensätze einige oder alle der folgenden Elemente enthalten:
einen Zeitstempel der Prüfung,
eine gehashte MSISDN,
einen Status der Prüfung, der Erfolg anzeigt, wenn das Verfahren die IMSI bestimmen konnte, und Misserfolg, wenn nicht,
eine gehashte IMSI,
eine ganze Zahl, die MCC und/oder MNC darstellt, und
eine ganze Zahl, die den Prüftyp darstellt.

11. Verfahren nach Anspruch 10, wobei die historischen Prüfdatensätze einige oder alle der folgenden Elemente enthalten: ein Stabilitätsfeld, das auf stabil oder instabil für IMSI-Änderungen gesetzt ist, ein Element des vorherigen Netzwerkfeldes, das die MCC/MNC der letzten Hintergrundprüfung für dieselbe MSISDN darstellt, und ein Stabilitätsperiodenelement, das die Zeit seit der ältesten Prüfung irgendeines Typs für dieselbe MSISDN darstellt, die dieselbe IMSI ergab, und mit der Eigenschaft, dass es keine spätere Prüfung irgendeines Typs für diese MSISDN gibt, die eine andere IMSI ergab.

12. Verfahren nach einem vorherigen Anspruch, das die Schritte beinhaltet, dass das System einen Cache mit statistischen Unterstützungsdaten unterhält, die aus mehreren historischen Hintergrund- und/oder bedarfsgesteuerten Prüfungen für mehrere MSISDNs gewonnen wurden, und dass der genannte Cache gelesen wird und Unterstützungsdaten als Reaktion auf die bedarfsgesteuerte Anforderung verarbeitet werden, um die Echtzeit-Antwortzeit zu beschleunigen, und wobei der genannte Cache die Ergebnisse einer Anzahl von Abfragen an den historischen Daten enthält, so dass sie während einer bedarfsgesteuerten Prüfung sofort verfügbar sind, und wobei Ergebnisse von mindestens einigen bedarfsgesteuerten Prüfungen in den historischen Prüfdatensätzen mit Schlüsselcharakteristiken der Situation gespeichert werden, die zur Zeit der Prüfung verfügbar waren, und die genannten Datensätze später aktualisiert werden, um zu kennzeichnen, ob auf sie eine IMSI-Stabilitätsperiode folgte oder nicht, was als Anzeige dafür gilt, ob zu dieser Zeit tatsächlich ein Betrug stattfand oder nicht, und eine neue bedarfsgesteuerte Prüfung durchgeführt werden soll, deren Schlüsselcharakteristiken mit denen früherer bedarfsgesteuerter Prüfungen verglichen werden und unter Berücksichtigung der Häufigkeit ähnlicher Prüfungen, auf die eine IMSI-Stabilitätsperiode folgte oder nicht, eine Wahrscheinlichkeit bestimmt wird, dass auf die aktuelle Prüfung ebenfalls eine IMSI-Stabilitätsperiode folgen wird oder nicht.

13. Verfahren nach einem vorherigen Anspruch, wobei die historischen Datensätze Datensätze enthalten, die für bestimmte historische Prüfungen spezifisch sind, und jede Folgendes beinhaltet:
einen Zeitstempel, das Datum einer Prüfung;
die Mobilfunknummer, die geprüft wurde;
das Ergebnis der Prüfung, wobei das Ergebnis Erfolg anzeigt, wenn eine IMSI zurückgegeben wurde, und Misserfolg, wenn keine IMSI zurückgegeben wurde;
die IMSI, die zur Zeit der Prüfung mit der Nummer assoziiert war;
das Mobilfunknetz, das zur Zeit der Prüfung mit der IMSI assoziiert war;
ein Flag, das Folgendes angibt: den Prüftyp, wobei die Kategorien Folgendes beinhalten: eine Hintergrundprüfung, eine bedarfsgesteuerte Prüfung und die Situation war ohne Verdacht auf SIM-Swap-Betrug, ob es sich um eine bedarfsgesteuerte Prüfung handelte und die Situation mit Verdacht auf SIM-Swap-Betrug war, und es sich um eine bedarfsgesteuerte Prüfung handelte und die Situation mit starkem Verdacht auf SIM-Swap-Betrug war;
ein Stabilitätsfeld mit einem Wert für instabile IMSI-Änderungen und einem Wert für stabile IMSI-Änderungen;
ggf. das frühere Mobilfunknetz, das mit der IMSI bei der vorherigen Hintergrundprüfung für dieselbe MSISDN assoziiert war, und
eine Stabilitätsperiode, die die Zeit seit der ältesten Prüfung irgendeines Typs für dieselbe MSISDN angibt, die dieselbe IMSI ergab.

14. SIM-Betrugserkennungssystem, das digitale Datenprozessoren und Kommunikationsschnittstellen für die Kommunikation mit externen Systemen einschließlich Mobilfunknetz-Sonden umfasst, wobei die Prozessoren zum Durchführen eines Verfahrens nach einem der Ansprüche 1 bis 13 konfiguriert sind.

15. Nichtflüchtiges computerlesbares Medium, das Softwarecode zur Durchführung des Verfahrens nach einem der Ansprüche 1 bis 13 enthält, wenn es von einem digitalen Datenprozessor ausgeführt wird.

## Revendications

1. Un procédé exécuté par un système de détection de fraude de SIM comprenant des processeurs de données numériques avec des circuits à mémoire, des espaces mémoires de données et des interfaces de communication, le procédé comprenant les opérations suivantes :
la conservation en mémoire de ou l'accès à une liste actuelle (2) de MSISDN surveillés,
l'entretien d'un ensemble d'enregistrements de vérification historiques (3) par l'exécution régulière de vérifications en arrière-plan, chacun d'eux par l'interrogation d'une sonde de réseau mobile de façon à déterminer l'IMSI et
des données d'indicatif de pays et/ou d'indicatif de réseau (MCC/MNC) associées à chaque MSISDN surveillé à un instant donné, la conservation en mémoire des résultats dans les enregistrements de vérification historiques,
où au moins certains enregistrements de vérification historiques comprennent des données de stabilité qui décrivent une relation de l'enregistrement actuel avec d'autres enregistrements historiques, antérieurs et subséquents, pour le même MSISDN,
l'actualisation desdites données de stabilité par une itération sur une pluralité d'enregistrements historiques,
la réponse à une requête à la demande en temps réel pour une vérification de façon à fournir une réponse estimant la probabilité qu'un MSISDN surveillé a été frauduleusement associé à un dispositif mobile par :
(a) l'interrogation d'une sonde de réseau mobile pour une IMSI, un MCC et un MNC courants associés au MSISDN,
(b) l'utilisation de la production en sortie de (a) et des informations dans l'ensemble d'enregistrements de vérification historiques, comprenant la fréquence de vérifications similaires qui ont été ou n'ont pas été suivies par une période de stabilité IMSI, de façon à générer une probabilité de fraude, et
(c) l'ajout d'un enregistrement de vérification historique qui enregistre la vérification à la demande.

2. Un procédé selon la Revendication 1, où si le MSISDN est balisé déconnecté dans la liste de MSISDN surveillés, le système renvoie un indicateur d'erreur ou un alerte de forte probabilité de fraude.

3. Un procédé selon les Revendications 1 ou 2, où si l'opération d'interrogation d'IMSI (a) échoue parce qu'il n'y a aucune IMSI actuellement associée au MSISDN, alors le système :
insère un nouvel enregistrement dans la liste d'enregistrements de vérification historiques (3) au moyen d'un timbre à date actuel, du MSISDN,
d'une balise indiquant un statut d'échec et d'une balise indiquant un état suspect, et
le renvoi d'une erreur et la terminaison de la requête à la demande.

4. Un procédé selon l'une quelconque des Revendications précédentes, où les MSISDN sont chiffrés dans la liste (2) de MSISDN surveillés, et éventuellement les MSISDN et les IMSI sont hachés lorsqu'ils sont conservés en mémoire dans les enregistrements de vérification historiques (3).

5. Un procédé selon l'une quelconque des Revendications précédentes, où à l'opération (a) les champs pays et réseau sont extraits et sont mis en correspondance dans un élément de données qui représente le réseau mobile auquel l'IMSI appartient, et éventuellement l'élément de données est un entier.

6. Un procédé selon l'une quelconque des Revendications précédentes, où l'opération (b) de détermination d'une probabilité comprend les sous-opérations suivantes :
si la liste d'enregistrements de vérification historiques contient au moins un nombre minimum, configuré, d'enregistrements de vérification en arrière-plan avec une balise de statut réussi pour ces MSISDN et IMSI, le renvoi d'une probabilité faible de fraude:
l'insertion d'un enregistrement de vérification à la demande avec une balise indiquant non suspect dans la liste de vérifications historiques, et
la terminaison de la requête à la demande.

7. Un procédé selon l'une quelconque des Revendications précédentes, où l'opération (b) de détermination d'une probabilité comprend les sous-opérations suivantes :
si la totalité des vérifications réussies antérieures dans la liste d'enregistrements historiques pour une période temporelle récente, configurée, pour ce MSISDN ont renvoyé la même IMSI :
le renvoi d'une probabilité faible de fraude,
l'insertion d'un enregistrement de vérification à la demande avec une balise indiquant non suspect dans la liste de vérifications historiques, et
la terminaison de la requête à la demande.

8. Un procédé selon l'une quelconque des Revendications précédentes, où l'opération (b) de détermination d'une probabilité comprend les sous-opérations suivantes :
si dans la liste de vérifications historiques il n'y a aucune vérification en arrière-plan réussie pour ce MSISDN mais qu'il y a une vérification à la demande réussie pour ce MSISDN qui a renvoyé une IMSI différente :
le renvoi d'une forte probabilité de fraude,
l'insertion d'un enregistrement de vérification à la demande avec une balise indiquant très suspect dans la liste de vérifications historiques, et
la terminaison de la requête à la demande.

9. Un procédé selon l'une quelconque des Revendications précédentes, où le processeur utilise lesdites données de stabilité en tant qu'indicateur qu'une requête à la demande reçue possède des caractéristiques similaires à ou différentes d'un ou de plusieurs autres enregistrements de vérification historiques, et éventuellement des caractéristiques utilisées pour comparer des enregistrements de vérification historiques comprennent un champ de réseau mobile antérieur.

10. Un procédé selon l'une quelconque des Revendications précédentes, où les enregistrements de vérification historiques comprennent certains ou la totalité des éléments suivants :
un timbre à date de la vérification,
un MSISDN haché,
un statut de la vérification indiquant un succès si le procédé a pu déterminer l'IMSI, et un échec dans le cas contraire,
une IMSI hachée,
un entier représentant le MCC et/ou le MNC, et
un entier représentant le type de vérification.

11. Un procédé selon la Revendication 10, où les enregistrements de vérification historiques comprennent certains ou la totalité des éléments suivants : un champ de stabilité qui est réglé sur stable ou sur instable pour des modifications d'IMSI, un élément de champ de réseau antérieur représentant le MCC/MNC de la vérification en arrière-plan la plus récente pour le même MSISDN, et un élément de période de stabilité représentant le temps depuis la vérification la plus ancienne de tout type pour le même MSISDN qui a renvoyé la même IMSI, et avec la propriété qu'il n'y a aucune vérification ultérieure de tout type pour ce MSISDN qui a renvoyé une IMSI différente.

12. Un procédé selon l'une quelconque des Revendications précédentes, comprenant l'opération par le système d'entretien d'une mémoire tampon de données de support statistiques glanées à partir d'une pluralité de vérifications historiques à la demande et/ou en arrière-plan pour une pluralité de MSISDN, et ladite mémoire tampon est lue et les données de support traitées en réponse à la requête à la demande, de façon à accélérer un temps de réponse en temps réel, et où ladite mémoire tampon détient les résultats d'un nombre d'interrogations des données historiques de sorte qu'elles soient immédiatement disponibles au cours d'une vérification à la demande, et où les résultats d'au moins certaines vérifications à la demande sont conservés en mémoire dans les enregistrements de vérification historiques avec des caractéristiques clés de la situation qui étaient disponibles à l'instant de la vérification, et lesdits enregistrements sont actualisés ultérieurement de façon à indiquer par balise s'ils ont été suivis ou non par une période de stabilité IMSI, ce qui est considéré être une indication qu'une fraude se déroulait effectivement à cet instant ou pas, et une nouvelle vérification à la demande est à exécuter et ses caractéristiques clés sont comparées à celles de vérifications à la demande passées et, en considérant la fréquence de vérifications similaires qui ont été ou n'ont pas été suivies par une période de stabilité IMSI, une probabilité que la vérification actuelle sera ou ne sera pas également suivie par une période de stabilité IMSI est déterminée.

13. Un procédé selon l'une quelconque des Revendications précédentes, où les enregistrements historiques comprennent des enregistrements qui sont spécifiques à des vérifications historiques particulières, et chacun d'eux comprend :
un timbre à date avec la date d'une vérification,
le numéro de mobile qui a été vérifié,
le résultat de la vérification, le résultat indiquant un succès si une IMSI a été renvoyée et échec si aucune IMSI n'a été renvoyée,
l'IMSI qui était associée au numéro à l'instant de la vérification,
le réseau mobile qui était associé à l'IMSI à l'instant de la vérification,
une balise indiquant : le type de vérification, les catégories comprenant une vérification en arrière-plan, une vérification à la demande et que la situation n'était pas suspecte de fraude par substitution de SIM, si c'était une vérification à la demande et la situation était suspecte de fraude par substitution de SIM, et si c'était une vérification à la demande et la situation était hautement suspecte de fraude par substitution de SIM,
un champ de stabilité, avec une valeur pour des modifications d'IMSI instables et une valeur pour des modifications d'IMSI stables,
le réseau mobile antérieur, si c'est le cas, associé à l'IMSI dans la vérification en arrière-plan antérieure pour le même MSISDN, et
une période de stabilité indiquant le temps depuis la vérification la plus ancienne de tout type pour le même MSISDN qui a renvoyé la même IMSI.

14. Un système de détection de fraude de SIM comprenant des processeurs de données numériques et des interfaces de communication destinées à une communication avec des systèmes externes comprenant des sondes de réseau mobile, les processeurs étant configurés de façon à exécuter un procédé selon l'une quelconque des Revendications 1 à 13.

15. Un support lisible par ordinateur non transitoire contenant du code logiciel destiné à l'exécution du procédé selon l'une quelconque des Revendications 1 à 13 lorsqu'il est exécuté par un processeur de données numériques.
